# EUROPÄISCHE PATENTSCHRIFT

(11) **EP 3 335 548 B1**
(45) Veröffentlichungstag und Bekanntmachung des Hinweises auf die Patenterteilung: **10.03.2021**
(21) Anmeldenummer: 18154736.5
(22) Anmeldetag: 18.03.2011
(51) Int. Cl.: A01J 5/017, A01J 5/00, A01K 1/12

(54) **MELKZEUG UND MELKSTAND MIT EINEM SOLCHEN MELKZEUG**
TEAT CUP AND A MILKING STALL INCLUDING SUCH A TEAT CUP
FAISCEAU TRAYEUR ET SALLE DE TRAITE POURVUE D'UN TEL FAISCEAU TRAYEUR

(43) Veröffentlichungstag der Anmeldung: 20.06.2018
(62) Teilanmeldung aus: 11712201.0
(73) Patentinhaber: GEA Farm Technologies GmbH, 59199 Bönen (DE)
(72) Erfinder: KRONE, Otto, 49479 Laggenbeck (DE)
(74) Vertreter: Kleine, Hubertus

(56) Entgegenhaltungen:
- EP-A2- 0 862 360
- WO-A1-00/13495
- WO-A2-98/05201
- DE-A1- 3 931 769
- DE-A1- 4 237 949
- US-A1- 2001 028 021

## Beschreibung

Die Erfindung betrifft ein Melkzeug nach dem Oberbegriff des Anspruchs 1. Die Erfindung bezieht sich auch auf einen Melkstand mit einem solchen Melkzeug.

Eine derartige Anordnung wird zum maschinellen Melken von milchgebenden Tieren verwendet.

Das Dokument EP 0 862 360 B1 beschreibt eine Vorrichtung zum automatischen Melken von Tieren, wobei ein Zitzenbecher mittels eines Seiles, das unten an dem Zitzenbecher angebracht ist, in einen Konus gezogen wird. Der Konus ist schwenkbar, sodass der Zitzenbecher unter eine Abdeckung geschwenkt werden kann.

Die Patentschrift EP 0647 391 B1 gibt eine Konstruktion zum automatischen Melken von Tieren an. Ein Zitzenbecher ist unmittelbar am Ende einer schlaufenförmigen Leitung angebracht, die in mindestens zwei Abschnitte unterteilbar ist. Ein erster Abschnitt ist mit dem Zitzenbecher verbunden und relativ starr, und ein zweiter Abschnitt ist relativ flexibel. Der Zitzenbecher wird außerdem durch eine Parallelführung, gegen welche er mit einem Seil anziehbar ist, gehalten und geführt.

Aus der Druckschrift WO 00/13495 A1 ist ein Melkstand bekannt, bei dem Zitzenbecher eines Melkzeugs durch eine Antriebseinheit an ihrem Schlauch nach dem Melken zurück in eine Parkstellung gezogen werden. Der Schlauch wird dabei durch eine mit Rollen versehene Führung gezogen. Gemäß der Druckschrift DE 39 31 769 C2 werden bei einem ähnlichen Aufbau angetriebene Rollen als kombinierte Antriebs- und Führungseinheit eingesetzt Der Oberbegriff des Anspruchs 1 geht aus diesen Druckschriften hervor.

Vor diesem Hintergrund besteht die Aufgabe der Erfindung darin, eine verbesserte Anordnung sowie einen Melkstand bereitzustellen.

Diese Aufgabe wird durch eine Anordnung mit den Merkmalen des Anspruchs 1 und durch einen Melkstand mit den Merkmalen des Anspruchs 13 gelöst.

Die erfindungsgemäße Anordnung umfasst ein Melkzeug für einen Melkstand zum Melken von milchgebenden Tieren, aufweisend mindestens eine Zitzenbechereinheit mit einem Gehäuse, einem Zitzenbecher, einer Antriebseinrichtung und einer mit dem Zitzenbecher verbundenen Schlauchanordnung, dadurch gekennzeichnet, dass die Schlauchanordnung mittels einer Schlauchführung geführt ist, wobei die Schlauchführung Rollen zur axialen Führung der Schlauchanordnung aufweist. Es wird dadurch eine gute Beweglichkeit des Zitzenbechers erreicht.

Die Antriebseinrichtung der mindestens einen Zitzenbechereinheit steht dabei mit der Schlauchanordnung und der Schlauchführung gleichzeitig in Wirkverbindung, wodurch ein gemeinsamer Bewegungsablauf mit einer geringen Teilezahl erhalten wird.

Die Antriebseinrichtung übt in einer Stellung eine Zugkraft auf den Zitzenbecher mit der Schlauchanordnung zur Einnahme der Ansetzstellung in Anlage gegen die Schlauchführung aus, wobei gleichzeitig die Schlauchführung in einer fixierten Position gehalten ist. In einer anderen Stellung wird keine Zugkraft auf den Zitzenbecher ausgeübt, wobei gleichzeitig die Schlauchführung in eine von der fixierten Position unterschiedliche Position freigegeben ist.

Der Zitzenbecher ist nur mit der Schlauchanordnung verbunden und benötigt kein zusätzliches Seil. Außerdem ist es möglich, dass bei schon in Melkstellung befindlichen Zitzenbechern eine seitliche Beweglichkeit möglich ist, ohne störende Zugkräfte auf diese in Melkstellung befindlichen Zitzenbecher auszuüben.

In einer vorteilhaften Ausgestaltung des Melkzeugs weist die Schlauchführung ein oberes Querteil, zwei Seitenteile und ein Fußteil auf, wobei das Fußteil und das Querteil an ihren Enden untereinander durch jeweils ein Seitenteil verbunden sind, wodurch sie einen Durchgang für die Schlauchanordnung festlegen. Dabei sind bevorzugt das Fußteil und das Querteil parallel zueinander angeordnet.

Weiter bevorzugt ist in dem Durchgang unterhalb des Querteils und oberhalb des Fußteils jeweils eine Horizontalrolle drehbar angeordnet. Alternativ oder zusätzlich ist in jedem Seitenteil jeweils eine Vertikalrolle drehbar angeordnet.

In einer vorteilhaften Ausgestaltung des Melkzeugs ist die Schlauchführung in einer fixierten Position verschwenkbar und in einer von der fixierten Position unterschiedlichen Position durch ein flexibles Element begrenzt frei bewegbar.

Die mindestens eine Zitzenbechereinheit kann aus einer Parkstellung, in welcher der Zitzenbecher eine zur Senkrechten geneigte, z.B. auch waagerechte, Position einnimmt, in eine Ansetzstellung, in welcher der Zitzenbecher in einer im Wesentlichen senkrechten Position steht, in eine Melkstellung, in welcher der Zitzenbecher mit einer zugeordneten Zitze des zu melkenden Tieres verbunden ist, und wieder zurück bewegt werden.

Das Melkzeug kann z.B. von einem Roboterarm derart bewegt werden, dass die Zitzenbecher einzeln aus einer Parkstellung in eine Ansetzstellung bewegt und an die entsprechenden Zitzen des zu melkenden Tieres in einer Melkstellung angehängt und am Ende des Melkvorgangs von den Zitzen abgezogen werden, wobei sie zunächst in die Ansetzstellung und dann in die Parkstellung zurückbewegt werden.

Mittels der Schlauchführung ist es dabei möglich, eine große freie Beweglichkeit des Zitzenbechers bei einer relativ kleinen freigegebenen Länge des flexiblen Elementes zu erzielen.

Ein weiterer bedeutender Vorteil liegt darin, dass ein Verheddern von Seilen mit benachbarten Zitzenbechern minimiert wird.

Da das flexible Element kurz ist und keine weiteren Seile zum Einsatz kommen, sind weder zusätzliche Rollen noch Flaschenzuganordnungen notwendig.

Mittels der umgeschwenkten Parkstellung der Zitzenbecher wird ein Verschmutzen derselben wirkungsvoll verhindert.

Abgeschlagene oder abgetretene oder auch abgefallene Zitzenbecher können sofort in die Parkstellung zurückbewegt werden und somit nicht auf den Boden fallen und verschmutzen.

Die Antriebseinrichtung kann über eine verstellbare Umlenkrolle mit der Schlauchanordnung und über ein flexibles Element mit der Schlauchführung zur Bewegung der mindestens einen Zitzenbechereinheit der Ansetzstellung in die Melkstellung und wieder zurück in die Ansetzstellung in Wirkverbindung stehen.

In einer bevorzugten Ausführung kann die Antriebseinrichtung als ein Verstellzylinder mit einer durchgehenden Kolbenstange ausgebildet sein, an deren einem Ende die Umlenkrolle und an deren anderen Ende das flexible Element angebracht ist. Hierbei ist es vorteilhaft, dass der Verstellzylinder nur einen kleinen Hub benötigt und wenig Bauraum beansprucht, wobei auch eine Kosteneinsparung möglich ist.

Das flexible Element kann über ein Kraftspeicherelement mit der Kolbenstange gekoppelt sein, wodurch ein notwendiger Längenausgleich bei der Verstellung ermöglicht ist.

In weiterer Ausführung kann die mindestens eine Zitzenbechereinheit eine Schwenkantriebseinrichtung zur Verschwenkung des Zitzenbechers aus der Ansetzstellung in die Parkstellung und zurück aufweisen.

Dabei kann die Schlauchführung in einem verschwenkbaren Fixierstück zur Einnahme ihrer fixierten Position aufnehmbar und mit dem verschwenkbaren Fixierstück mittels der Schwenkantriebseinrichtung in die Parkstellung und aus der Parkstellung in die Ansetzstellung verschwenkbar sein. Durch diese Anordnung ist es möglich, dass dazu die Schlauchanordnung herangezogen werden kann, ohne eine zusätzliche Einrichtung an dem Zitzenbecher anzubringen. Dadurch ist eine große freie Beweglichkeit des Zitzenbechers möglich.

Das flexible Element kann durch einen Führungsabschnitt des verschwenkbaren Fixierstücks geführt sein, was einen kompakten Aufbau ergibt.

In weiterer Ausführung kann die Schlauchanordnung einen Mehrfachschlauch, beispielsweise einen Doppelschlauch, aufweisen, in welchem sie mindestens teilweise angeordnet ist. Dadurch wird ein kompakter Aufbau erreicht, wobei ein Verheddern von Schläuchen weiter minimiert wird.

Ein Melkstand zum Melken von milchgebenden Tieren kann mit dem oben beschriebenen Melkzeug versehen sein.

Dabei kann das Melkzeug an einer Tragarmeinrichtung oder einem Roboterarm angebracht sein.

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische perspektivische Ansicht eines erfindungsgemäßen Melkzeugs;
- Figur 2: eine schematische Längsschnittdarstellung einer Zitzenbechereinheit des Melkzeugs nach Figur 1 in einer Ansetzstellung;
- Figur 3: eine schematische Längsschnittdarstellung der Zitzenbechereinheit des Melkzeugs nach Figur 1 in einer Parkstellung;
- Figur 4: eine schematische Längsschnittdarstellung der Zitzenbechereinheit des Melkzeugs nach Figur 1 in einer Melkstellung;
- Figuren 5, 5a und 5b: Darstellungen einer Schlauchführung;
- Figur 6: eine schematische Ansicht des Melkzeugs nach Figur 1 von unten;
- Figur 7: eine schematische Ansicht des Melkzeugs nach Figur 1 von der Seite der Zitzenbecher;
- Figur 8 und 9: Darstellungen der Zitzenbechereinheit des Melkzeugs in der Melkstellung zur Erläuterung von Doppelschlauchabschnitten; und
- Figur 10: eine perspektivische Darstellung eines erfindungsgemäßen Melkstands.

In den Figuren sind gleiche bzw. ähnliche Funktionselemente mit gleichen Bezugszeichen versehen. Ein Koordinatensystem x, y, z dient zur besseren Orientierung.

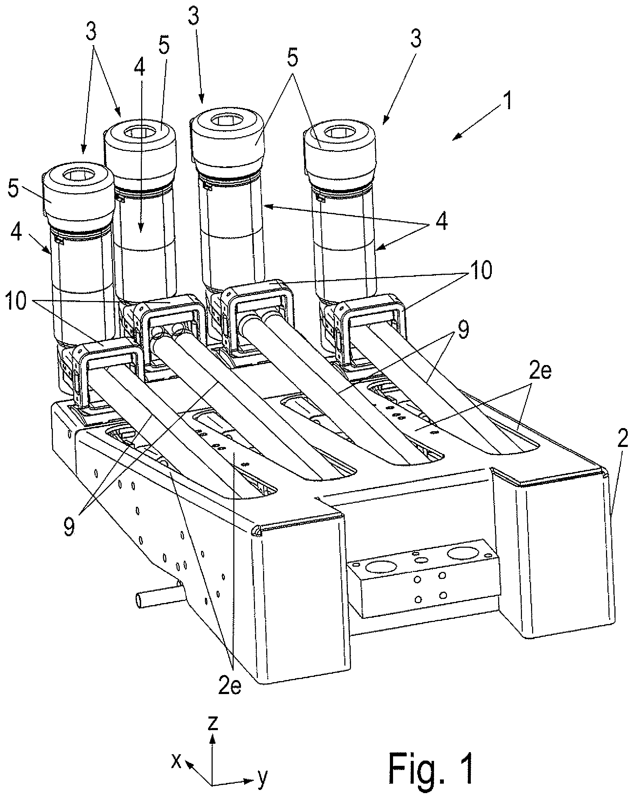

In Figur 1 ist eine schematische perspektivische Ansicht eines erfindungsgemäßen Melkzeugs 1 gezeigt.

Das Melkzeug 1 weist in diesem Ausführungsbeispiel vier Zitzenbechereinheiten 3 auf, welche in ihren Längsrichtungen (in x-Richtung) nebeneinander angeordnet sind und ein gemeinsames Gehäuse 2 aufweisen, das weiter unten noch näher beschrieben wird. Jede der vier Zitzenbechereinheiten 3 kann unabhängig von den anderen eine von drei unterschiedlichen Stellungen einnehmen, die unten im Einzelnen detailliert erläutert werden.

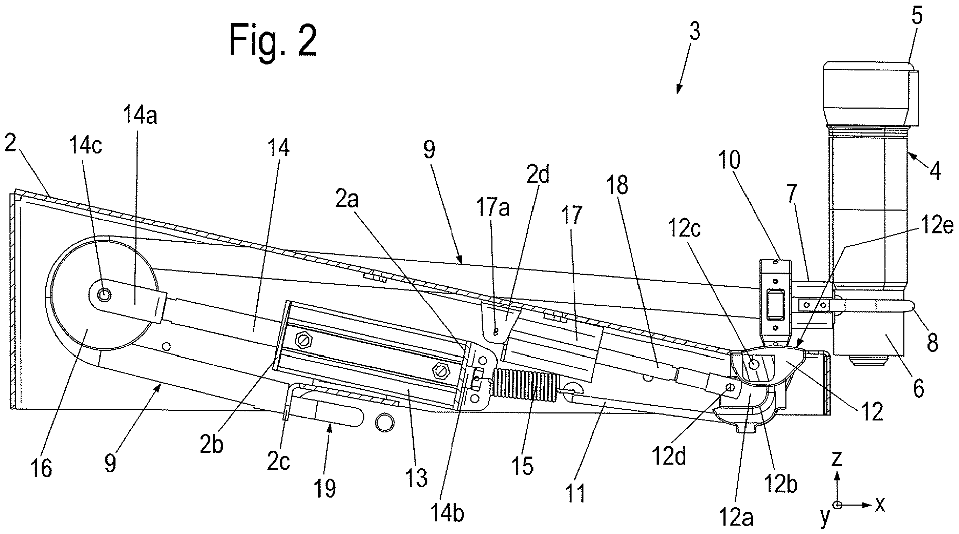

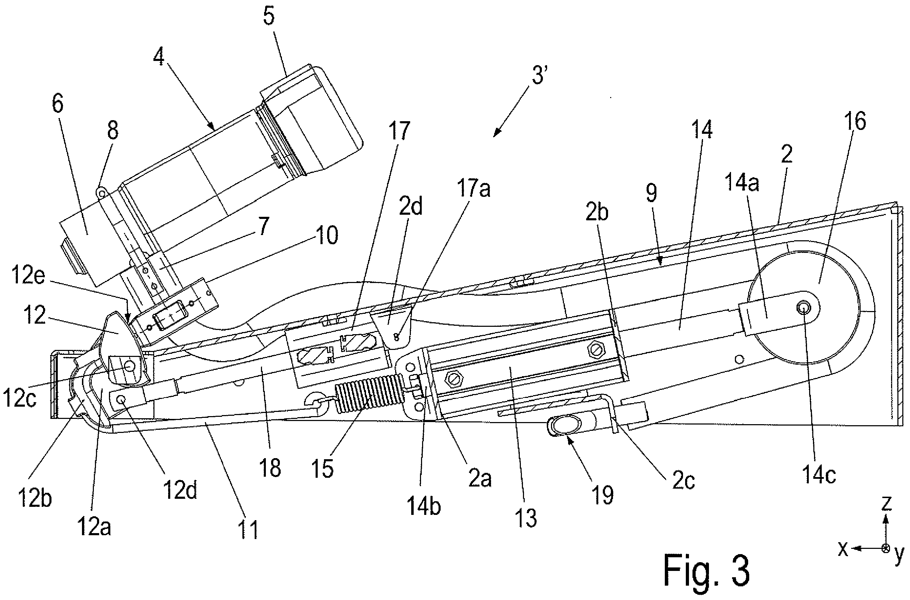

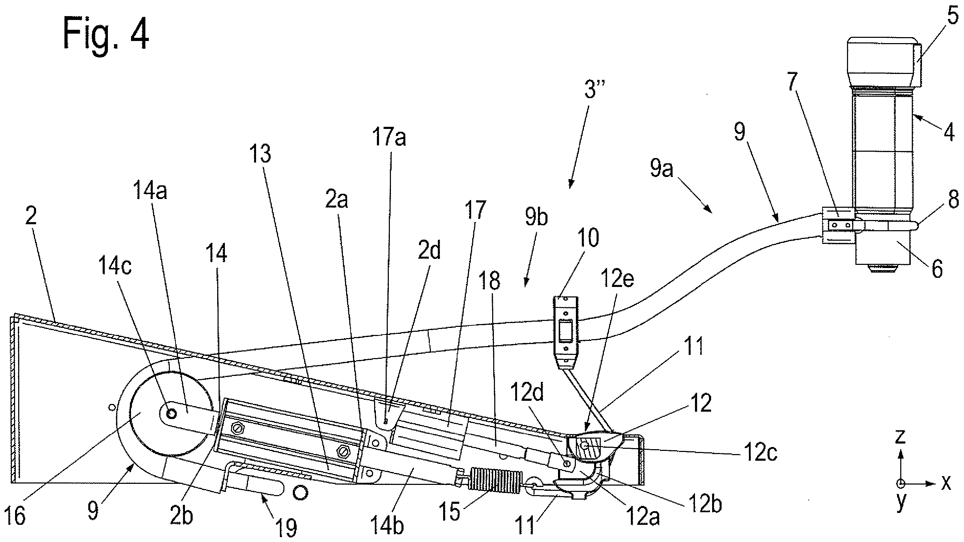

In Figur 1 sind die vier Zitzenbechereinheiten 3 der besseren Übersicht wegen in einer aufrechten, so genannten Ansetzstellung dargestellt, die im Zusammenhang mit Figur 2 beschrieben wird. In einer so genannten Parkstellung (siehe Figur 3) ist die jeweilige Zitzenbechereinheit 3 unbenutzt und aus der aufrechten Lage um die y-Achse verschwenkt. Die dritte Stellung ist eine so genannte Melkstellung, die in Figur 4 gezeigt ist. Zur besseren Unterscheidung ist die Zitzenbechereinheit 3 in Ansetzstellung mit dem Bezugszeichen 3, in der Parkstellung mit dem Bezugszeichen 3' und in der Melkstellung mit dem Bezugszeichen 3" versehen.

Jede Zitzenbechereinheit 3 weist einen Zitzenbecher 4 mit einem Zitzengummi, der einen Kopf 5 und einem Schaft hat, und einem Befestigungsabschnitt 6 auf. Der Kopf 5 besitzt eine Zitzenöffnung zum Einführen einer Zitze (nicht gezeigt). In einem Abstand zum Kopf 5 ist an dem unteren Ende des Schafts der Befestigungsabschnitt 6 mit einem Haltersegment 7, das in diesem Ausführungsbeispiel den Befestigungsabschnitt 6 mit einem Halterbügel 8 (andere Ausführungen sind natürlich möglich) umgreift, angeordnet.

Das Haltersegment 7 steht mit einem Doppelschlauch 9 in Verbindung, welcher in seinem Inneren Einzelschläuche zur Vakuumaufbringung und Milchabsaugung führt. Der Doppelschlauch 9 ist durch eine Schlauchführung 10 geführt und gehalten und in seinem weiteren Längsverlauf durch eine Öffnung 2e in einer in diesem Ausführungsbeispiel schräg verlaufenden Oberseite des Gehäuses 2 in dessen Inneres geführt, was im Weiteren noch näher erläutert wird. Das Gehäuse 2 kann z.B. auch stufig sein.

Figur 2 zeigt eine schematische Längsschnittdarstellung einer Zitzenbechereinheit 3 des Melkzeugs 1 nach Figur 1 in einer Ansetzstellung.

Die Ansetzstellung dient dazu, den Zitzenbecher 4 in eine in Relation zum Roboterarm fixierte Position zu bringen, um ihn dann an eine entsprechende Zitze eines zu melkenden Tieres anzuhängen. Dazu wird das Melkzeug 1 mit einer entsprechenden Vorrichtung, z.B. einem Roboterarm, bewegt.

Der Abschnitt des Gehäuses 2, welcher der jeweiligen Zitzenbechereinheit 3 zugeordnet ist, ist in diesem Ausführungsbeispiel im Querschnitt in der x-z-Ebene wie in Figur 2 dargestellt in etwa trapezförmig, aber nicht darauf beschränkt. Die Oberseite des Gehäuses 2 mit den Öffnungen 2e (Figur 1) verläuft von einer in z-Richtung höheren Rückseite des Gehäuses 2, die in Figur 2 links dem Zitzenbecher 4 gegenüberliegend angeordnet ist, schräg nach vorn (rechts in Figur 2) zu einer kurzen Vorderseite.

Der mit einem Ende durch das Haltersegment 7 an den Zitzenbecher 4 befestigte Doppelschlauch 9 verläuft durch die Schlauchführung 10, die Öffnung 2e des Gehäuses 2 auf die Rückseite des Gehäuses 2 zu und dann um eine in der Nähe der Rückseite des Gehäuses 2 befindlichen Umlenkrolle 16 bis zu einem Schlauchstutzenhalter 2c, an dem der Doppelschlauch 9 mit seinem anderen Ende befestigt ist. Der Schlauchstutzenhalter 2c ist mit dem Gehäuse 2 fest verbunden. Der Doppelschlauch 9 wird durch die Umlenkrolle 16 um etwa 180° in seiner Richtung umgelenkt und verläuft dann in x-Richtung auf die Vorderseite des Gehäuses 2 hin. An dem Schlauchstutzenhalter 2c sind Schlauchstutzen 19 angebracht.

Oberhalb des Schlauchstutzenhalters 2c ist eine Antriebseinrichtung 13, hier z.B. ein Pneumatikzylinder mit einer durchgehenden Kolbenstange 14, an Antriebshaltern 2a, 2b, die fest mit dem Gehäuse verbunden sind, fest angebracht. Die Kolbenstange 14 verläuft etwa parallel zu der auf der Zeichenebene senkrecht stehenden schrägen Oberseite des Gehäuses 2. An dem zur Rückseite des Gehäuses 2 weisenden einen Ende der Kolbenstange 14, das hier als Druckende 14a bezeichnet ist, ist die Umlenkrolle 16 in einer Umlenkrollenachse 14c drehbar angeordnet. Die Umlenkrollenachse 14c steht senkrecht auf der Zeichenebene und verläuft in y-Richtung.

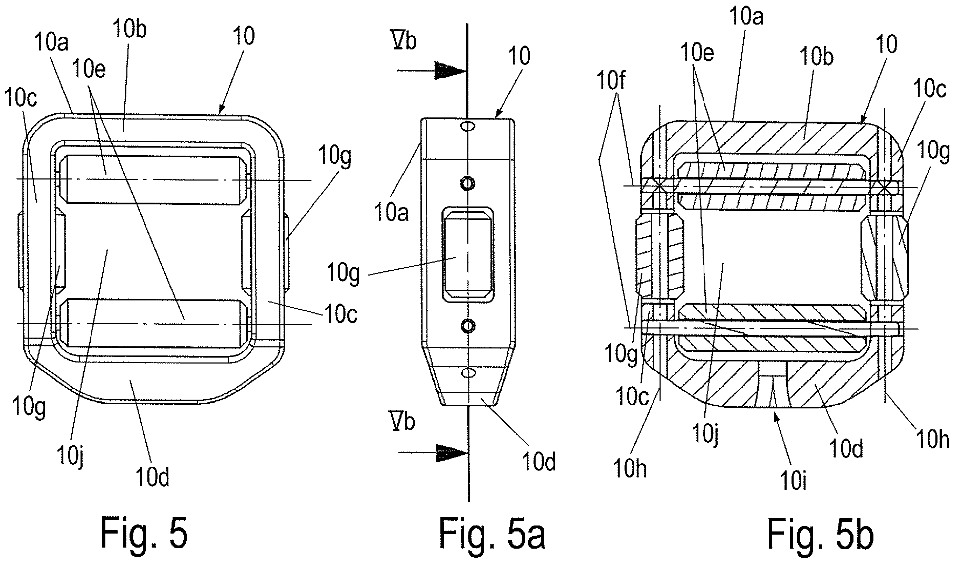

Ein zweites Ende der Kolbenstange 14 ragt aus der Antriebseinrichtung 13 zur Vorderseite des Gehäuses 2 weisend heraus und ist mit einem Ende eines Kraftspeicherelementes 15, z.B. eine Zugfeder, verbunden. Das andere Ende dieser Zugfeder ist an einem ersten Ende eines flexiblen Elementes 11 angebracht, das z.B. ein Seilabschnitt ist. Das flexible Element 11 verläuft schräg nach unten auf die Vorderseite des Gehäuses 2 zu und wird dann an einem Führungsabschnitt 12b eines Fixierstücks 12 um ca. 90° in die z-Richtung umgelenkt. Der so umgelenkte Endabschnitt des anderen Endes des flexiblen Elementes 11 geht durch eine Aufnahme 12e des Fixierstücks 12 hindurch und ist mit der Schlauchführung 10 verbunden, was unten weiter noch näher erläutert wird. Dabei liegt die Schlauchführung 10 mit ihrem Fußteil 10d (siehe Figur 5) in der Aufnahme 12e an und wird durch eine Zugkraft des flexiblen Elementes 11 in dieser Position gehalten.

Das Fixierstück 12 ist an dem Gehäuse 2 um eine Schwenkachse 12c verschwenkbar befestigt und weist einen Anlenkabschnitt 12a auf, welcher mit dem Führungsabschnitt 12b unter der Schwenkachse 12c angeordnet ist. Die Schwenkachse 12c steht wie die Umlenkrollenachse 14c parallel zu dieser senkrecht auf der Zeichenebene und verläuft in y-Richtung.

Der Anlenkabschnitt 12a des Fixierstücks 12 ist über eine Anlenkachse 12d mit einem Ende einer Schwenkstange 18 einer Schwenkantriebseinrichtung 17 verbunden. Die Schwenkantriebseinrichtung 17 ist z.B. ein Pneumatikzylinder und ist über eine Schwenkantriebsanlenkung 17a in einem Schwenkantriebshalter 2d mit dem Gehäuse 2 verbunden.

In der Ansetzstellung ist der Zitzenbecher 4 mit dem Haltersegment 7 an der Schlauchführung 10 anliegend fixiert, indem der Doppelschlauch 9 auf das Haltersegment 7 eine Zugkraft überträgt, die durch die Antriebseinrichtung 13 erzeugt wird. Dazu ist die Kolbenstange 14 der Antriebseinrichtung 13 zur Rückseite des Gehäuses 2 hin ausgefahren und spannt den Doppelschlauch 9 gegen die x-Richtung. Eine Zugspannung baut sich dabei auf, da der Doppelschlauch 9 mit einem Ende an dem Schlauchstutzenhalter 2c und mit seinem anderen Ende über das an der Schlauchführung 10 anliegende Haltersegment 7 des Zitzenbechers 4 gehalten ist. Weiterhin ist das Fixierstück 12 durch die eingefahrene Schwenkstange 18 der Schwenkantriebseinrichtung 17 in eine solche Position geschwenkt, in welcher die Schlauchführung 10 senkrecht steht, d.h. in z-Richtung ausgerichtet ist. Dabei wird durch die Form des an der Schlauchführung 10 anliegenden Haltersegments 7 so eine in z-Richtung verlaufende, korrespondierend ausgerichtete Haltung des Zitzenbechers 4 erzielt, dessen Längsachse somit auch in der z-Richtung liegt.

Da die Kolbenstange 14 der Antriebseinrichtung 13 zur Rückseite des Gehäuses 2 hin ausgefahren ist, ist die an dem Zugende 14b angebrachte Zugfeder 15 gespannt und erzeugt gleichzeitig eine Zugkraft in dem flexiblen Element 11, welches die Schlauchführung 10 fest in die Aufnahme 12e des Fixierstücks hineinzieht und in ihr fixiert.

Mit anderen Worten bewirkt die Antriebseinrichtung 13 mit der durchgehenden Kolbenstange 14 eine Fixierung des Zitzenbechers 4 in der Ansetzstellung an der Schlauchführung 10 und eine Fixierung der Schlauchführung 10 in dem Fixierstück 12.

Figur 3 zeigt eine schematische Längsschnittdarstellung der Zitzenbechereinheit 3 bzw. 3' des Melkzeugs 1 nach Figur 1 in einer Parkstellung.

Die in Figur 3 gezeigte Parkstellung ist aus der in Figur 2 gezeigten Ansetzstellung in einfacher Weise dadurch erreicht, dass die Schwenkantriebseinrichtung 17 die Schwenkstange 18 ausfährt und das Fixierstück 12 um die Schwenkachse 12c verschwenkt. Die Schwenkstange 18 ist dazu zur Vorderseite des Gehäuses 2 (die in Figur 3 links liegt) ausgefahren und das Fixierstück 12 ist im Uhrzeigersinn um die y-Achse so verschwenkt, dass der Zitzenbecher 4 zur Oberseite des Gehäuses 2 hin verschwenkt ist. Dabei wird das Kraftspeicherelement 15 zusätzlich gespannt, was eine Erhöhung der Zugkraft in dem flexiblen Element 11 zur Folge hat und die Fixierung der Schlauchführung 10 in der Aufnahme 12e des Fixierstücks erhöht. Das Kraftspeicherelement 15 dient so auch für einen notwendigen Längenausgleich zwischen der Kolbenstange 14 und dem flexiblen Element 11. Selbstverständlich ist es durch Anpassung der zugehörigen Komponenten möglich, dass der Zitzenbecher 4 in der Parkstellung fast waagerecht positioniert wird.

Diese Parkstellung wird in einem unbenutzten Zustand des Melkzeugs 1 eingenommen. Weiterhin verbleiben beim Ansetzen der Zitzenbecher 4 die übrigen in der Parkstellung. Außerdem wird beim Ende eines Melkvorgangs eines Zitzenbechers 4 dieser wieder in die Parkstellung gebracht. In der Parkstellung ist eine Verschmutzung der Zitzenöffnung des Kopfes 5 nur gering.

Wenn der Zitzenbecher 4 in der Ansetzstellung in einer nahezu senkrechten Position mit einer vorbestimmten Zitze des zu melkenden Tieres verbunden ist, wird die Melkstellung der Zitzenbechereinheit 3" eingenommen, welche Figur 4 in einer schematischen Längsschnittdarstellung der Zitzenbechereinheit 3" des Melkzeugs 1 nach Figur 1 in der Melkstellung zeigt.

Zu Einnahme der Melkstellung wird die Kolbenstange 14 der Antriebseinrichtung 13 in Richtung auf die Vorderseite des Gehäuses 2 ausgefahren, wobei die Umlenkrolle 16 von der Rückseite des Gehäuses 2 in x-Richtung weg bewegt wird und den Doppelschlauch 9 entspannt. Gleichzeitig wird das flexible Element 11 entlastet, wodurch die Schlauchführung 10 aus der Aufnahme 12e des Fixierstücks 12 freigegeben wird. Dadurch ergibt sich eine große freie Beweglichkeit des Zitzenbechers 4. Der an der Zitze des zu melkenden Tieres festgesaugte Zitzenbecher 4 ist somit nur über den Doppelschlauch 9 mit dem Gehäuse 2 des Melkzeugs 1 verbunden. Da der Doppelschlauch 9 nur ein geringes Gewicht besitzt, werden keine Zugkräfte auf den Zitzenbecher 4 ausgeübt.

Außerdem wird auch eine seitliche Bewegungsfreiheit in y-Richtung zum Anfahren und Ansetzen der anderen Zitzenbecher 4 ermöglicht, da der bereits in Melkstellung befindliche Zitzenbecher 4 über den Doppelschlauch 9 keine Behinderung darstellt und keine zusätzlichen Zugkräfte durch die weiteren Ansetzvorgänge auf den Euter bzw. die Zitze des zu melkenden Tiers aufbringt.

Die Figuren 5, 5a und 5b zeigen Darstellungen der Schlauchführung 10.

Figur 5 zeigt eine Ansicht in Richtung des Doppelschlauchs 9 in x-Richtung, Figur 5a eine Seitenansicht in y-Richtung und Figur 5b eine Schnittansicht in der y-z-Ebene längs Linie Vb aus Figur 5a.

Die Schlauchführung 10 weist einen Körper 10a mit einer im Wesentlichen quadratischen Gestalt auf. Der Körper 10a umfasst ein oberes Querteil 10b, zwei Seitenteile 10c und ein Fußteil 10d. Fußteil 10d und Querteil 10b sind parallel zueinander angeordnet und an ihren Enden untereinander durch jeweils ein Seitenteil 10c verbunden, wodurch sie einen Durchgang 10j für den Doppelschlauch 9 festlegen. In dem Durchgang 10j ist unterhalb des Querteils 10b und oberhalb des Fußteils 10d jeweils eine Horizontalrolle 10e angeordnet. Jede Horizontalrolle 10e ist um eine Horizontalrollenachse 10f, die in der y-Richtung verläuft, drehbar. In jedem Seitenteil 10c ist jeweils eine Vertikalrolle 10g um eine jeweilige Vertikalrollenachse 10h drehbar angeordnet, wobei die Vertikalrollenachsen 10h in z-Richtung verlaufen und senkrecht zu den Horizontalrollenachsen 10f angeordnet sind. Die Horizontalrollen 10e und Vertikalrollen 10g dienen zur reibungsarmen Führung des Doppelschlauchs 9 in dem Durchgang 10j. Dadurch ist eine freie axiale Beweglichkeit der Schlauchführung 10 auf dem Doppelschlauch 9 bzw. relativ zueinander möglich. Die Horizontalrollen 10e und die Vertikalrollen 10g sind hier als zylindrische Rollen ausgebildet. Andere Formen, z.B. ballige Rollen oder beschichtete Rollen sind natürlich möglich.

Das Fußteil 10d ist in z-Richtung nach unten hin verdickt und in x-Richtung nach unten hin verjüngt (Figur 5a). Es dient zum Einsatz in der Aufnahme 12e des Fixierstücks 12. Außerdem ist in dem verdickten Fußteil 10d der Schlauchführung 10 ein Befestigungsabschnitt 10i für eine Befestigung des Endes des flexiblen Elementes 11 vorgesehen.

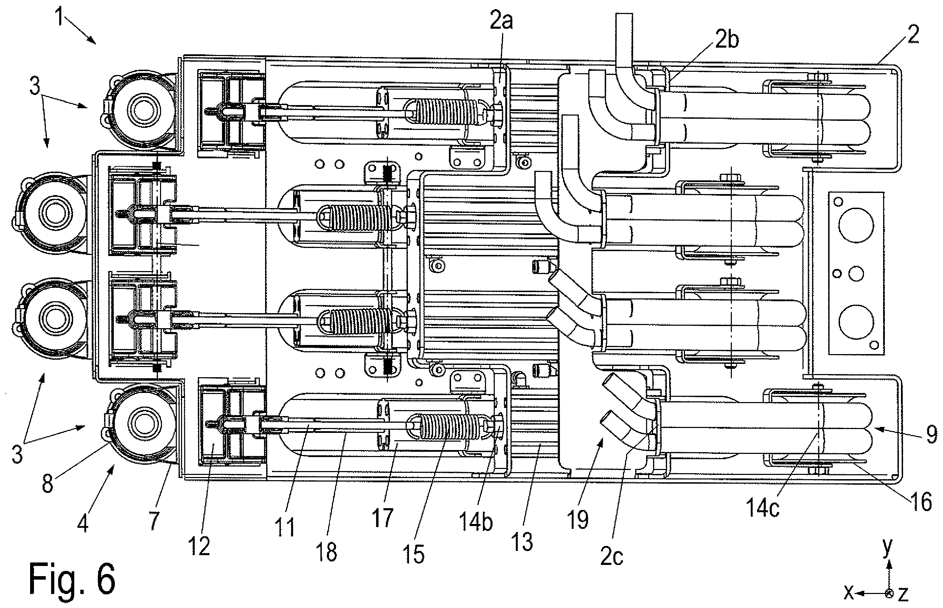

Figur 6 zeigt eine schematische Ansicht des Melkzeugs 1 nach Figur 1 von unten, wobei die Anordnung der verschiedenen Funktionseinheiten und -elemente zu sehen ist. Nur an der unten liegenden Zitzenbechereinheit 3 sind Bezugszeichen angeben. Das Gehäuse 2 ist von unten offen. Es ist natürlich auch möglich, dass jede Zitzenbechereinheit 3 ein eigenes Gehäuse besitzt, die aneinander in y-Richtung angeordnet und z.B. auch gegeneinander um die y-Achse verschwenkbar bzw. in einem gewissen Maß flexibel verschwenkbar sind. Die innen angeordneten Zitzenbechereinheiten 3 sind in x-Richtung um einen Abstand vor den äußeren Zitzenbechereinheiten 3 angeordnet, wodurch ein Zustellweg beim Ansetzvorgang minimiert werden kann. Weiterhin sind jeweils zwei Schlauchstutzen 19 zu erkennen.

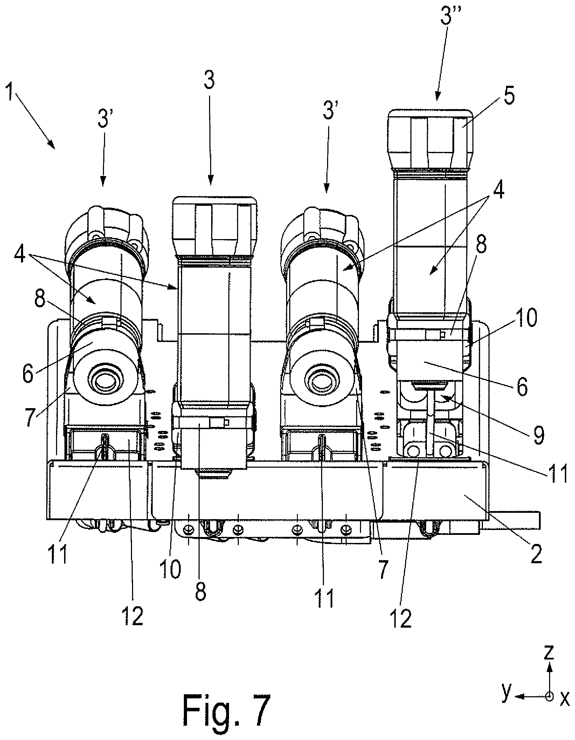

In Figur 7 ist eine schematische Ansicht des Melkzeugs 1 nach Figur 1 von der Seite der Zitzenbecher 4, d.h. von der Vorderseite des Gehäuses 2 dargestellt.

Die Zitzenbechereinheiten 3, 3', 3" sind hier in den unterschiedlichen Stellungen gezeigt. Die Zitzenbechereinheiten 3' befinden sich in der Parkstellung. Bei der Zitzenbechereinheit 3 steht der Zitzenbecher 4 in senkrechter Position in der Ansetzstellung. Die rechts außen befindliche Zitzenbechereinheit 3" ist in der Melkstellung mit freigegebenem Doppelschlauch 9.

Es ist in Figur 7 deutlich zu erkennen, dass der Zitzenbecher 4 der Zitzenbechereinheit 3" in der Melkstellung in z-Richtung höher steht als der Zitzenbecher 4 in der Ansetzstellung und die umgeschwenkten Zitzenbecher 4 in der Parkstellung. Durch den freigegebenen Doppelschlauch 9 kann das Melkzeug 1 beim Ansetzen der anderen Zitzenbecher 4 auch - wie schon oben erwähnt - in einem bestimmten Maß in der y-Richtung bewegt werden, ohne dass Kräfte auf den in Melkstellung befindlichen Zitzenbecher 4 ausgeübt werden.

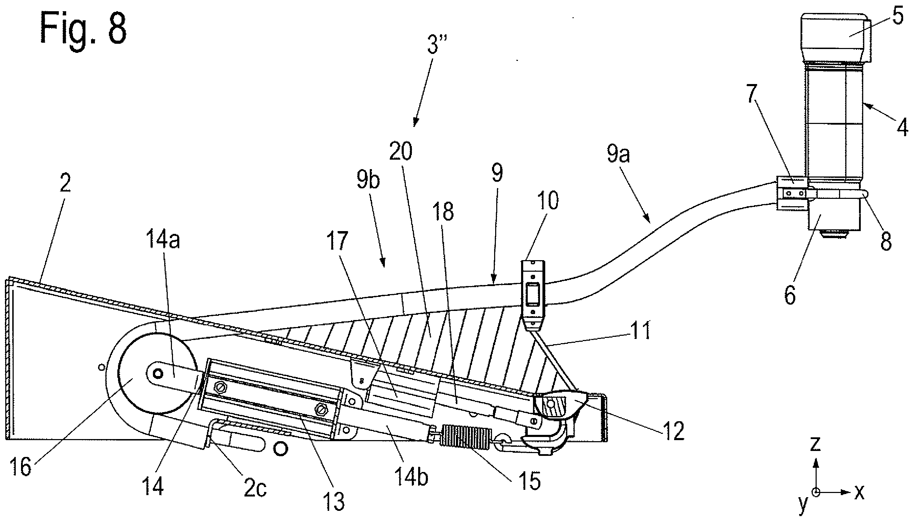

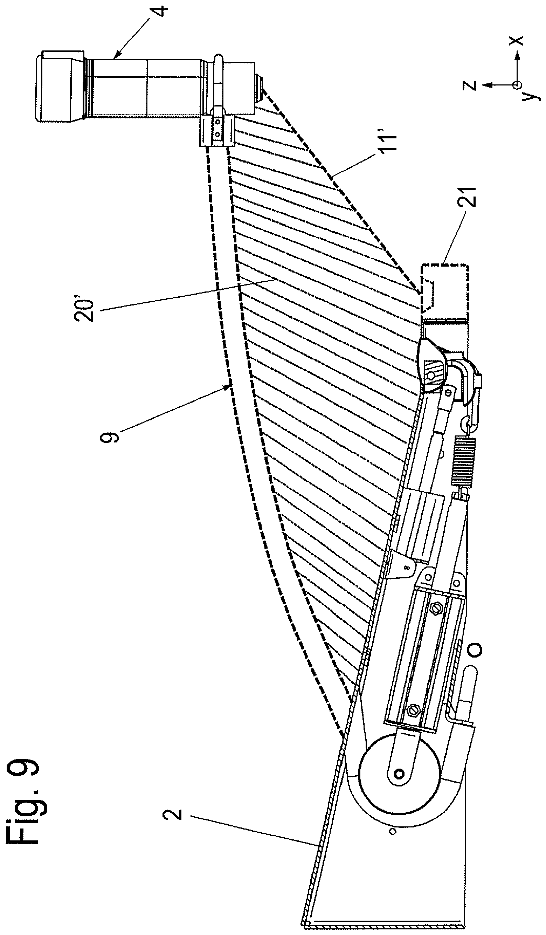

Figur 8 und 9 sind Darstellungen der Zitzenbechereinheit 3" des Melkzeugs in der Melkstellung zur Erläuterung von durch den Doppelschlauch festgelegten Bereichen.

In der Melkstellung ist der jeweilige Zitzenbecher 4 an einem freien Schlauchende 9a des Doppelschlauchs 9 bei einer relativ kleinen freigegebenen Länge des flexiblen Elementes 11 und somit der Schlauchführung 10 mit einer großen freien Beweglichkeit ausgestattet. Der Grund hierzu liegt in der doppelten Freigabe von Doppelschlauch 9 und Schlauchführung 10, zumal die Schlauchführung 10 - wie bereits oben detailliert erläutert - so gestaltet ist, dass sie auf dem Doppelschlauch 9 axial frei beweglich ist.

Ein großer Vorteil besteht bei dieser Konstruktion außerdem darin, dass ein Verheddern des flexiblen Elementes 11 und des Doppelschlauchs 9 mit benachbarten Zitzenbechereinheiten 3, 3', 3" minimiert wird. Es ist nahezu unmöglich, dass ein benachbarter Zitzenbecher 4 in den schraffierten Bereich, der von der Oberseite des Gehäuses 2, einer Schlauchgrenze 9b des Doppelschlauchs 9 und dem flexiblen Element 11 umgrenzt ist, gelangt. Wenn das flexible Element 11' direkt am Zitzenbecher 4 und einem Halterstück 21 angeordnet wäre, wie Figur 9 zeigt, ist die Gefahr aufgrund des in Figur 9 schraffierten größeren Bereiches 20' wesentlich größer.

Ein Einnehmen der Parkstellung (Figur 3) aus der Melkstellung (Figur 4) erfolgt über zwischenzeitliches Einnehmen der Ansetzstellung (Figur 2), indem die Kolbenstange 14 der Antriebseinrichtung 13 mit der Umlenkrolle 16 wieder in Richtung auf die Rückseite des Gehäuses 2 ausfährt und mit dem Zugende 14b einfährt. Dabei wird gleichzeitig die Schlauchführung 10 in die konische Aufnahme 12e des Fixierstücks 12 gezogen und der Zitzenbecher 4 über den Doppelschlauch 9, der durch die sich zurückbewegende Umlenkrolle 16 wieder gespannt wird, gegen die Schlauchführung 10 gezogen. Dadurch wird der Zitzenbecher 4 nach beendetem Melkvorgang von der zugeordneten Zitze abgezogen und fixiert. Dies erfolgt auch, wenn der Zitzenbecher 4 von dem zu melkenden Tier abgeschlagen (abgetreten) wurde oder abgefallen ist.

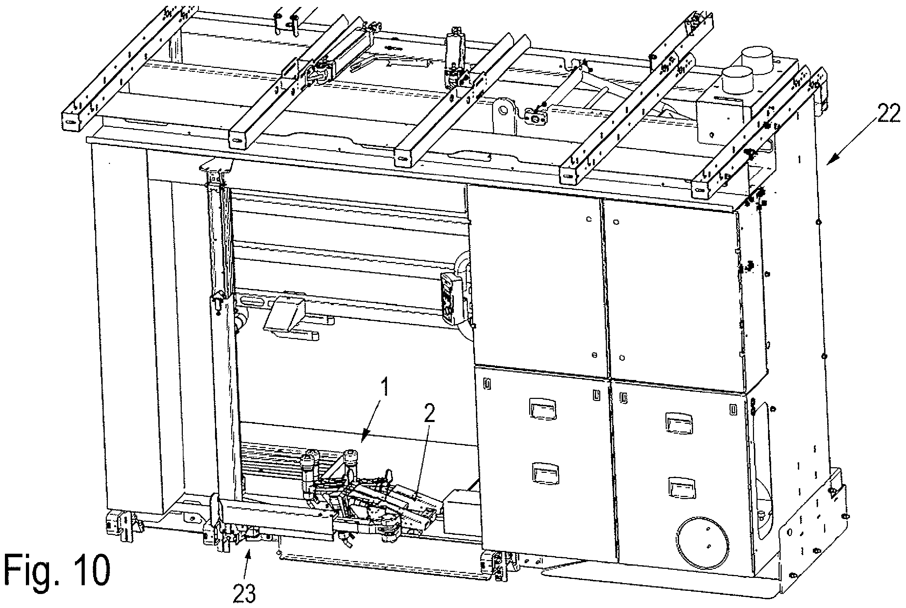

Schließlich zeigt Figur 10 eine perspektivische Darstellung eines Melkstands 22 mit dem Melkzeug 1 und Gehäuse 2. Das Melkzeug 2 ist hier an einer Tragarmeinrichtung 23 angebracht, welche selbsttätig oder durch einen Roboter (nicht gezeigt) zur Einnahme verschiedener Postionen zum Melken und zur Einstellung der verschiedenen Stellungen der Zitzenbechereinheiten 3, 3', 3" betätigbar ist. Mehrere solcher Melkstände 22 können in Reihe angeordnet sein und durch einen einzigen Roboter bedient werden.

Das Melkzeug 1 kann auch an einem Roboterarm montiert sein.

Die Tragarmeinrichtung 23 hat die Funktion, das Melkzeug 1 gewichtsneutral zu tragen und so leichtgängig zu sein, dass er den Bewegungen des zu melkenden Tiers folgt.

Wird das Melkzeug 1 an einer solchen Tragarmeinrichtung 23 befestigt, wird zum automatischen Ansetzen der Zitzenbecher 4 ein Roboterarm an die Tragarmeinrichtung 23 angedockt. Der Roboterarm bewegt die Tragarmeinrichtung 23 bzw. eine Tragarm davon zusammen mit dem Melkzeug 1 zu den Zitzen des zu melkenden Tieres und setzt die Zitzenbecher 4 nacheinander an die zugeordneten Zitzen an. Sobald alle Zitzen angesetzt sind, löst sich der Roboterarm vom Tragarm und fährt gegebenenfalls zu einem nächsten Melkstandplatz, um dort die Zitzenbecher 4 anzusetzen. Die Zitzenbecher 4 hängen während der Melkphase mit dem Melkzeug 1 am Tragarm, der den Bewegungen des Tieres folgt. Sobald der Milchfluss einer Zitze versiegt ist, wird der entsprechende Zitzenbecher 4 von der Zitze abgezogen und zum Schutz vor Schmutzeintrag in die Parkstellung gebracht. Sobald alle Zitzenbecher abgezogen und in der Parkstellung sind, schwenkt der Tragarm mit dem Melkzeug 1 von der Position unter dem Tier in die Position neben dem Tier, sodass das Tier den Melkplatz verlassen kann.

Da die Zitzenbechereinheiten 3 einzeln und unabhängig voneinander verwendbar und betätigbar sind, können sie natürlich auch für milchgebende Tiere mit Eutern, die eine unterschiedliche Anzahl von Zitzen, z.B. 3 oder 4, habe, verwendet werden.

Die Erfindung ist nicht auf die oben dargestellten Ausführungsbeispiele beschränkt sondern im Rahmen der beigefügten Ansprüche modifizierbar.

So kann zum Beispiel der Doppelschlauch 9 als ein Mehrfachschlauch ausgebildet sein.

### Bezugszeichen

- 1: Melkzeug
- 2: Gehäuse
- 2a, 2b: Antriebshalter
- 2c: Schlauchstutzenhalter
- 2d: Schwenkantriebshalter
- 2e: Öffnung
- 3, 3', 3": Zitzenbechereinheit
- 4: Zitzenbecher
- 5: Kopf
- 6: Befestigungsabschnitt
- 7: Haltersegment
- 8: Halterbügel
- 9: Doppelschlauch
- 9a: Schlauchende
- 9b: Schlauchgrenze
- 10: Schlauchführung
- 10a: Körper
- 10b: Querteil
- 10c: Seitenteil
- 10d: Fußteil
- 10e: Horizontalrolle
- 10f: Horizontalrollenachse
- 10g: Vertikalrolle
- 10h: Vertikalrollenachse
- 10i: Befestigungsabschnitt
- 10j: Durchgang
- 11: Flexibles Element
- 12: Fixierstück
- 12a: Anlenkabschnitt
- 12b: Führungsabschnitt
- 12c: Schwenkachse
- 12d: Anlenkachse
- 12e: Aufnahme
- 13: Antriebseinrichtung
- 14: Antriebsstange
- 14a: Druckende
- 14b: Zugende
- 14c: Umlenkrollenachse
- 15: Kraftspeicherelement
- 16: Umlenkrolle
- 17: Schwenkantriebseinrichtung
- 17a: Schwenkantriebsanlenkung
- 18: Schwenkstange
- 19: Schlauchstutzen
- 20, 20': Bereich
- 21: Halterstück
- 22: Melkstand
- 23: Tragarmeinrichtung
- x, y, z: Koordinaten

## Patentansprüche

1. Melkzeug (1) für einen Melkstand (22) zum Melken von milchgebenden Tieren, aufweisend mindestens eine Zitzenbechereinheit (3, 3', 3") mit einem Gehäuse (2), einem Zitzenbecher (4), einer Antriebseinrichtung (13) und einer mit dem Zitzenbecher (4) verbundenen Schlauchanordnung, wobei die Schlauchanordnung mittels einer Schlauchführung (10) geführt ist, die Rollen (10e, 10g) zur axialen Führung der Schlauchanordnung aufweist, wobei die Antriebseinrichtung (13) der mindestens einen Zitzenbechereinheit (3, 3', 3") mit der Schlauchanordnung und der Schlauchführung (10) gleichzeitig in Wirkverbindung steht, **dadurch gekennzeichnet, dass**
die Antriebseinrichtung (13) in einer Stellung eine Zugkraft auf den Zitzenbecher (4) mit der Schlauchanordnung zur Einnahme einer Ansetzstellung in Anlage gegen die Schlauchführung (10) ausübt, wobei gleichzeitig die Schlauchführung (10) in einer fixierten Position gehalten ist, und in einer anderen Stellung keine Zugkraft auf den Zitzenbecher (4) ausübt, wobei gleichzeitig die Schlauchführung (10) in eine von der fixierten Position unterschiedliche Position freigegeben ist.

2. Melkzeug (1) nach Anspruch 1, bei dem die Schlauchführung (10) ein oberes Querteil (10b), zwei Seitenteile (10c) und ein Fußteil (10d) aufweist, wobei das Fußteil (10d) und das Querteil (10b) an ihren Enden untereinander durch jeweils ein Seitenteil (10c) verbunden sind, wodurch sie einen Durchgang (10j) für die Schlauchanordnung festlegen.

3. Melkzeug (1) nach Anspruch 2, bei dem das Fußteil (10d) und das Querteil (10b) parallel zueinander angeordnet sind.

4. Melkzeug (1) nach Anspruch 2 oder 3, bei dem in dem Durchgang (10j) unterhalb des Querteils (10b) und oberhalb des Fußteils (10d) jeweils eine Horizontalrolle (10e) drehbar angeordnet ist.

5. Melkzeug (1) nach einem der Ansprüche 2 bis 4, bei dem in jedem Seitenteil (10c) jeweils eine Vertikalrolle (10g) drehbar angeordnet ist.

6. Melkzeug (1) nach einem der Ansprüche 1 bis 5, bei dem die Schlauchführung (10) in der fixierten Position verschwenkbar und in der von der fixierten Position unterschiedlichen Position durch ein flexibles Element (11) begrenzt frei bewegbar ist.

7. Melkzeug (1) nach einem der Ansprüche 1 bis 6, bei dem die Antriebseinrichtung (13) über eine verstellbare Umlenkrolle (16) mit der Schlauchanordnung und über ein flexibles Element (11) mit der Schlauchführung (10) zur Bewegung der mindestens einen Zitzenbechereinheit (3, 3', 3") der Ansetzstellung in eine Melkstellung und wieder zurück in eine Ansetzstellung in Wirkverbindung steht.

8. Melkzeug (1) nach Anspruch 7, bei dem die mindestens eine Zitzenbechereinheit (3, 3', 3") eine Schwenkantriebseinrichtung (17) zur Verschwenkung des Zitzenbechers (4) aus einer Ansetzstellung in eine Parkstellung und zurück aufweist.

9. Melkzeug (1) nach Anspruch 8, bei dem die Schlauchführung (10) in einem verschwenkbaren Fixierstück (12) zur Einnahme ihrer fixierten Position aufnehmbar und mit dem verschwenkbaren Fixierstück (12) mittels der Schwenkantriebseinrichtung (17) in die Parkstellung und aus der Parkstellung in die Ansetzstellung verschwenkbar ist.

10. Melkzeug (1) nach Anspruch 9, bei dem das flexible Element (11) durch einen Führungsabschnitt (12b) des verschwenkbaren Fixierstücks (12) geführt ist.

11. Melkzeug (1) nach einem der vorhergehenden Ansprüche, bei dem die Schlauchanordnung einen Mehrfachschlauch aufweist, in welchem sie mindestens teilweise angeordnet ist.

12. Melkzeug (1) nach Anspruch 11, bei dem der Mehrfachschlauch als ein Doppelschlauch (9) ausgebildet ist.

13. Melkstand (22) zum Melken von milchgebenden Tieren, mit einem Melkzeug (1) nach einem der vorhergehenden Ansprüche.

## Claims

1. A milking cluster (1) for a milking parlor (22) for milking dairy animals, comprising at least one teat cup unit (3, 3', 3") with a housing (2), a teat cup (4), a drive device (13) and a hose arrangement connected to the teat cup (4), wherein the hose arrangement is guided by means of a hose guide (10), the rollers (10e, 10g) for axially guiding the hose assembly, wherein the drive device (13) of the at least one teat cup unit (3, 3', 3") is simultaneously in operative connection with the hose assembly and the hose guide (10), **characterized in that**
the drive device (13) in one position exerts a tensile force on the teat cup (4) with the hose arrangement for assuming an attachment position in abutment against the hose guide (10), wherein at the same time the hose guide (10) is held in a fixed position, and in another position exerts no tensile force on the teat cup (4), wherein at the same time the hose guide (10) is released into a position different from the fixed position.

2. A milking cluster (1) according to claim 1, wherein the hose guide (10) comprises an upper transverse part (10b), two side parts (10c) and a foot part (10d), the foot part (10d) and the transverse part (10b) being connected to each other at their ends by one side part (10c) each, thereby defining a passage (10j) for the hose assembly.

3. A milking cluster (1) according to claim 2, in which the foot part (10d) and the cross part (10b) are arranged parallel to each other.

4. A milking cluster (1) according to claim 2 or 3, wherein a horizontal roller (10e) is rotatably arranged in the passage (10j) below the cross member (10b) and above the foot member (10d), respectively.

5. A milking cluster (1) according to one of claims 2 to 4, in which a vertical roller (10g) is rotatably arranged in each side part (10c).

6. A milking cluster (1) according to one of claims 1 to 5, in which the hose guide (10) is pivotable in the fixed position and is freely movable to a limited extent by a flexible element (11) in the position different from the fixed position.

7. A milking cluster (1) according to one of claims 1 to 6, in which the drive device (13) is in operative connection with the hose arrangement via an adjustable deflection roller (16) and with the hose guide (10) via a flexible element (11) for moving the at least one teat cup unit (3, 3', 3") of the attachment position into a milking position and back again into an attachment position.

8. A milking cluster (1) according to claim 7, in which the at least one teat cup unit (3, 3', 3") comprises a pivot drive device (17) for pivoting the teat cup (4) from an attachment position to a parking position and back.

9. A milking cluster (1) according to claim 8, in which the hose guide (10) can be received in a pivotable fixing piece (12) to assume its fixed position and can be pivoted with the pivotable fixing piece (12) into the parking position and out of the parking position into the attachment position by means of the pivot drive device (17).

10. A milking cluster (1) according to claim 9, in which the flexible element (11) is guided by a guide portion (12b) of the pivotable fixing piece (12).

11. A milking cluster (1) according to one of the preceding claims, in which the hose assembly comprises a multiple hose in which it is at least partially arranged.

12. A milking cluster (1) according to claim 11, in which the multiple hose is designed as a double hose (9).

13. A milking parlor (22) for milking of dairy animals, with a milking cluster (1) according to one of the preceding claims.

## Revendications

1. Faisceau trayeur (1) pour une stalle de traite (22) pour la traite d'animaux donnant du lait, présentant au moins une unité de gobelets trayeurs (3, 3', 3") avec un boîtier (2), un gobelet trayeur (4), un dispositif d'entraînement (13) et une disposition de tuyaux reliée au gobelet trayeur (4), dans lequel la disposition de tuyaux est guidée au moyen d'un conduit pour tuyaux (10) qui comprend des galets (10e, 10g) pour le guidage axial de la disposition de tuyaux, le dispositif d'entraînement (13) de l'au moins une unité de gobelets trayeurs (3, 3', 3") étant en même temps en liaison active avec la disposition de tuyaux et le conduit pour tuyaux (10), **caractérisé en ce que** l'unité d'entraînement (13) exerce, dans une position, une force de traction sur le gobelet trayeur (4) avec la disposition de tuyau pour prendre une position d'application en appui contre le conduit pour tuyaux (10), le conduit pour tuyaux (10) étant en même temps retenu dans une position fixée, et n'exerçant pas de force de traction sur le gobelet trayeur (4) dans une autre position, le conduit pour tuyaux (10) étant libéré en même temps dans une position différente de la position fixée.

2. Faisceau trayeur (1) selon la revendication 1, dans lequel le guide pour tuyaux (10) présente une partie transversale supérieure (10b), deux parties latérales (10c) et une partie inférieure (10d), la partie inférieure (10d) et la partie transversale (10b) étant reliées entre elles à leurs extrémités par une partie latérale (10c) chacune, de sorte qu'elles définissent un passage (10j) pour la disposition de tuyaux.

3. Faisceau trayeur (1) selon la revendication 2, dans lequel la partie inférieure (10d) et la partie transversale (10b) sont disposées parallèlement l'une à l'autre.

4. Faisceau trayeur (1) selon la revendication 2 ou 3, dans lequel un galet horizontal (10e) est disposé avec possibilité de rotation dans le passage (10j) en dessous de la partie transversale (10b) et un autre au-dessus de la partie inférieure (10d).

5. Faisceau trayeur (1) selon l'une des revendications 2 à 4, dans lequel un galet vertical (10g) est disposé avec possibilité de rotation dans chaque partie latérale (10c).

6. Faisceau trayeur (1) selon l'une des revendications 1 à 5, dans lequel le guide pour tuyaux (10) peut être pivoté dans la position fixée et déplacé avec une liberté de mouvement limitée par un élément flexible (11) dans la position différente de la position fixée.

7. Faisceau trayeur (1) selon l'une des revendications 1 à 6, dans lequel le dispositif d'entraînement (13) est en liaison active avec la disposition de tuyaux par l'intermédiaire d'un galet de renvoi (16) réglable et avec le conduit pour tuyaux (10) par l'intermédiaire d'un élément flexible (11) pour déplacer l'au moins une unité de gobelets trayeurs (3, 3', 3") de la position d'application à une position de traite et retour dans une position d'application.

8. Faisceau trayeur (1) selon la revendication 7, dans lequel l'au moins une unité de gobelets trayeurs (3, 3', 3") présente un dispositif d'entraînement pivotant (17) pour faire pivoter le gobelet trayeur (4) d'une position d'application à une position de rangement et retour.

9. Faisceau trayeur (1) selon la revendication 8, dans lequel le conduit pour tuyaux (10) peut être reçu dans une pièce de fixation pivotante (12) pour prendre sa position fixée et peut pivoter avec la pièce de fixation pivotante (12) au moyen du dispositif d'entraînement pivotant (17) vers la position de rangement et de la position de rangement à la position d'application.

10. Faisceau trayeur (1) selon la revendication 9, dans lequel l'élément flexible (11) est guidé à travers une section de guidage (12b) de la pièce de fixation pivotante (12).

11. Faisceau trayeur (1) selon l'une des revendications précédentes, dans lequel la disposition de tuyaux présente un tuyau multiple dans lequel elle est au moins en partie disposée.

12. Faisceau trayeur (1) selon la revendication 11, dans lequel le tuyau multiple est réalisé comme un double tuyau (9).

13. Stalle de traite (22) pour la traite d'animaux donnant du lait, avec un faisceau trayeur (1) selon l'une des revendications précédentes.
